# EUROPEAN PATENT SPECIFICATION

(11) **EP 2 105 076 B1**
(45) Date of publication and mention of the grant of the patent: **09.11.2011**
(21) Application number: 08075217.3
(22) Date of filing: 28.03.2008
(51) Int. Cl.: A47J 31/40

(54) **Apparatus for preparing beverages**
Vorrichtung zur Zubereitung von Getränken
Appareil de préparation de boissons

(43) Date of publication of application: 30.09.2009
(73) Proprietor: VEROMATIC INTERNATIONAL B.V., 3316 GZ Dordrecht (NL)
(72) Inventor: Verhoef, Kees, 3363 CA Sliedrecht (NL)
(74) Representative: Brookhuis, Hendrik Jan Arnold

(56) References cited:
- EP-A- 0 843 983
- EP-A- 1 639 924
- WO-A-03/082066
- US-A1- 2005 079 265

## Description

### FIELD OF THE INVENTION

The invention relates to an apparatus for preparing beverages, in particular beverages such as coffee, cappuccino, espresso, chocolate milk, soup. The apparatus makes it possible to mix substances e.g. a particle starting element with liquid starting element, such as coffee granulate or cocoa powder with water, filter coffee with milk powder, etc., for preparing the beverage.

An apparatus of this type, for example in the form of a vending machine, is known in the art. Such an apparatus typically comprises a mixing housing defining a mixing chamber and a drive for driving a mixing body, also known as impellor, inside the mixing chamber for mixing the starting elements.

### BACKGROUND OF THE INVENTION

To prepare a beverage, starting elements such as for example coffee granulates and water are fed into the mixing housing. By driving the mixing body, the granulate and the water are intimately mixed to form a homogeneous solution. The mixed beverage is than drained from the mixing housing into for example another chamber for further processing, or via an outlet into a cup for consumption of the beverage.

To prevent residue of for example coffee granulate or undissolved milk powder adhering to the wall of the mixing housing and/or the mixing body from having an adverse effect on the quality of the mixed beverages, and also to prevent residues from working their way through the machine and/or providing extra workload for the drive driving the mixing body, the mixing housing and mixing body need to be cleaned regularly.

The cleaning of the mixing chamber and the mixing body is a job which often has to be done by untrained or less experienced personnel and in a short period of time. The apparatus has to be partially taken apart to gain access to components to be cleaned. This involves several steps and therefore takes a considerable amount of time.

Also, some components of the apparatus are positioned such that they obstruct access by cleaning personnel to other components lying beneath or behind those components, or which are partly enclosed by those components. The mixing body is for example positioned inside the mixing chamber. It may be positioned near the walls of the mixing chamber, and may even be partially enclosed by the mixing housing. The mixing housing thus prevents easy access to the mixing body. It is therefore difficult to remove the mixing body for easy cleaning.

Furthermore, many components, such as the mixing body and mixing chamber get slippery during use due to residue of for example moist granulate sticking to it. Also, removing components may for example require extra force due to moist and/or particles leaking in-between components or onto guiding surfaces during use. This makes it difficult to manipulate and/or remove the components, and increases the chance of damage to the parts due to the use of excessive force.

Cleaning of an apparatus for preparing beverages is therefore a laborious task, and takes considerable time and effort. Furthermore, chances of parts not being cleaned sufficiently and of parts being damaged during cleaning are high.

US 2005/0079265 discloses a mixing device comprising an input container configured for receiving a product that comprises a fluid component and a second component. A whipper is provided in a housing of the device that is configured for aerating and frothing the product. The input container has a quick-release/attach mechanism configured as a bayonet locking mechanism.

### SUMMARY OF THE INVENTION

It is an object of the present invention to provide an apparatus for preparing beverages in which the above mentioned drawbacks are eliminated altogether or occur to a greatly reduced extent.

According a first object of the present invention, this is achieved by designing an apparatus according to claim 1. Such an apparatus comprises a mixing housing comprising a first and second part. The first and second part of the mixing housing can be moved relatively to each other between a holding position in which they engage each other for defining a mixing chamber and a cleaning position in which they are disengaged from each other for enabling cleaning. Furthermore, the first part of the mixing housing is also moveable between a mounted position and a dismounted position, guided by a guiding system parallel to the driveshaft. A drive is provided for, via a driveshaft, driving a mixing body inside the mixing chamber for mixing the materials.

For cleaning an apparatus according to the invention, the first and second part of the mixing housing are moved from the holding position into the cleaning position, and the first part of the mixing housing is moved from the mounted position into the dismounted position. While the first part of the mixing housing is moved into the dismounted position, it is guided by a guiding system in a direction parallel to the driveshaft, and engages the mixing body provided on the driving end of the driveshaft. As a result, the mixing body is moved by the first part of the mixing housing along the driveshaft, releasing it from its mixing position and moving it from the mixing position into a cleaning position.

In the mixing position, the mixing body is provided onto the driving end of the driveshaft for mixing starting materials contained in the mixing chamber when in the mounted position. The mixing body comprises an opening for engaging the driving end of the driveshaft. In order to prevent the mixing body from slippage while mixing, the opening of the mixing body tightly fits the driveshaft. Therefore, the mixing body is not easily moved out of the mixing position.

In the cleaning position, the mixing body is removed from the driveshaft or can easily be manipulated and/or removed from the driveshaft, thus enabling easy cleaning of the mixing body. Furthermore, easy manipulation of the mixing body makes it possible to simply move the mixing body away from its position near the first part of the mixing housing. This allows easy access to the first part of the mixing housing for cleaning.

Because the mixing body does not need to be released by hand from its mixing position, but instead thereof is released as a result of moving the first part of the mixing housing, the mixing body is removed in a controlled manner. Furthermore, the mixing body is removed in an axial direction, thus no momentum is exercised on the drive shaft. The chance of inexperienced personnel damaging the components is therefore limited.

Furthermore, since the mixing body can be removed from the cleaning position by moving the first part of the mixing chamber into the dismounted position, both the mixing body and the first part of the mixing housing can be removed in one step. Thus, an apparatus according to the present invention comprises a mixing chamber and a mixing body which are easy to clean, and in a limited period of time.

The apparatus according to the invention is provided with a guiding system for rotating the first part of the mixing housing about the driveshaft and simultaneously translating the first part of the mixing housing parallel to the driveshaft when the first part of the mixing housing is moved between the mounted position and the dismounted position. Thus, by personnel simply rotating the first part of the mixing housing it is moved towards its dismounted position. Furthermore, the mixing body can be removed efficiently with a relative small force from the mixing position into a position in which it is easy to clean

The guiding system comprises a cam and a helical shaped cam track, which cam track has the driveshaft at its centre axis. The cam track has a pitch such that a relatively large movement of a cam about the driveshaft is coupled with a relatively small movement of the cam parallel to the driveshaft. A small force enacted upon the first part of the mixing housing in a rotational direction is thus advantageously converted into a relatively large force in the translational direction.

Therefore, a mixing body tightly clamped onto the driveshaft can easily be moved form the mixing position into the cleaning position. The large force needed for removing the mixing body from its mixing position, is enacted upon the mixing body in a controlled manner e.g. via the first part of the mixing housing, and not by hand. Thus the risk of untrained personnel' damaging the mixing body is limited.

Furthermore, a guiding system comprising a cam and cam track combination is relatively easy to fabricate against relatively low costs.

In a further preferred embodiment, a part of the cam track is provided with a flange extending parallel to, and at a distance of, the main guiding surface of the cam track. The cam is provided with a part extending parallel to the guide track enabling clamping of the cam between the flange and the cam track when the first part of the mixing housing is positioned in the mounted position. Thus the first part of the mixing housing can easily be secured in the mounted position.

In a further embodiment, an apparatus is provided for preparing beverages such as coffee or chocolate milk, as described above, comprising a first component, for example first part of the mixing housing 16, and a second component, for example second part of the mixing housing, for engaging the first component. The apparatus is provided with a lever pivotably mounted to the second component at a pivot point for movement of the lever between a neutral position, for combining the first component and the second component, and a guiding position, for disengaging the second component and the first component to enable cleaning of the apparatus. The lever comprises a handling arm with a grip for manipulating the iever and a guiding arm comprising a contact surface. The apparatus is further provided with a guiding surface for guidingly contacting the contact surface of the lever, which guiding surface is mounted on or integrated with the first component, such that when the lever is in the neutral position, the first component and the second component can be combined, and when the lever is in the seperating position and the contact surface contacts the guiding surface, the first component and the second component are separated.

The lever can be used for easy disengaging the first and second component. The form of the components is often defined by their function and/or the need to fit inside the apparatus, therefore the components are not alsways easy to handle. Since the lever is provided with a grip the disengagement handling is much easier then when one would handle the components directly.

In a further preferred embodiment an apparatus according to the invention comprises a lever which is pivotably attached to the second part of the mixing housing for pivoting between a clamping position and a neutral position. The lever has a handling arm comprising a grip for manipulating the lever and a clamping arm comprising a hook for engaging a part other than the second part of the mixing housing, when in the clamping position.

An advantage of such a lever is that the second part of the mixing housing can easily be secured in its position.

In a preferred embodiment, the distance from the hook to the pivot point is smaller than the distance from the grip to the pivot point, providing leverage to the moment enacted upon the grip, such that the second part of the housing can be clamped in position by using only little force.

Further objects, embodiments and elaborations of the apparatus and the method according to the invention will be apparent from the following description, in which the invention is further illustrated and elucidated on the basis of a number of exemplary embodiments, with reference to the drawings.

### BRIEF DESCRIPTION OF THE DRAWINGS

Fig. 1 shows a three dimensional perspective view of an apparatus according to the invention;
Fig. 2 shows a schematic side view in cross section of the apparatus from figure 1 in a first position;
Fig. 3 shows a schematic side view of some of the components of the apparatus from figure 1 in a second position;
Fig. 4 shows a schematic side view of some of the components of the apparatus from figure 1 in a third position;
Fig. 5 shows a schematic side view of some of the components of the apparatus from figure 1 in a fourth position; and
Fig. 6 shows some of the components of the apparatus from fig. 1 in a schematic exploded view in perspective.

### DETAILED DESCRIPTION OF THE INVENTION

An apparatus according to the invention for preparing beverages, in particular beverages such as coffee, cappuccino, espresso, chocolate milk, etc, generally comprises several components mounted on a frame, and a housing for protecting those components. For preparing beverages by mixing substances e.g. a particle starting element with a liquid starting element, such as coffee granulate or cocoa powder with water, the apparatus is provided with components such as a mixing housing, a drive and a mixing body.

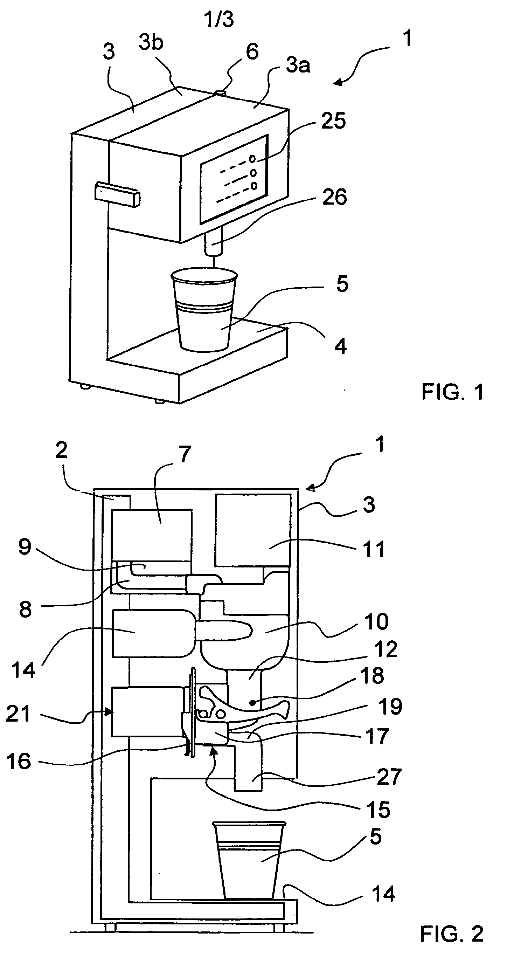

An apparatus 1 according to the invention for preparing a beverage is shown in Fig. 1. A side view in cross section of the same apparatus showing components in a position for preparing the beverage is shown in Fig. 2.

The apparatus 1 comprises a frame 2 for mounting components of the apparatus. The components and frame 2 are contained by an apparatus housing 3. Part 3a of the apparatus housing 3 is, via a hinge 6, hingeably connected to the frame 2, and part 3b of the housing is fixed to the frame 2. By moving the part 3a form the housing from a closed position, as is shown in Fig.1, to an open position, the housing is opened to gain access to some of the components of the apparatus 1 for cleaning, maintenance or repair. In the closed position shown in Fig. 1 the hingeably connected part 3a of the housing 3 is fixed by a closure.

The apparatus 1 is further provided with a plateau 4 for supporting one or more cups 5. Above the plateau 4 a nozzle 26 is provided for filling cups 5 supported by the plateau 4 with a beverage.

Via a control panel 25 instructions for preparing a beverage can be entered by a user of the apparatus.

The apparatus 1 comprises a reservoir 7 for containing a liquid starting element, for example water. The water reservoir 7 is connected via an outlet to a conduit 8 which extends through a heating component 9 for warming the water. The conduit 8 drains into a first inlet of a combining chamber 10. Next to the water reservoir 7 is mounted a reservoir 11 for containing a starting element in the form of particles, for example coffee granulate. The coffee granulates reservoir 11 drains via an outlet into a second inlet of the combining chamber 10.

A reservoir 14 for containing a second powder like starting element, for example milk powder, is situated next to the combining chamber 10. An outlet of the milk powder reservoir 14 is connected via a conduit to a third inlet of the combining chamber 10.

The reservoirs are provided with means (not shown) for controlling the amount of water, granulate and milk powder transported to the combining chamber 10. The amounts are adequate for preparing one beverage, but may for example be adjusted by the user for providing a beverage with extra milk.

The combining chamber 10 is provided with an outlet, which outlet is connected via a conduit 12 to a mixing chamber defined by a mixing housing 15. The combination of coffee granulate, water and milk powder is transported via the outlet of the combining chamber 10 and the conduit 12 into an inlet 18 of the mixing housing, and into the mixing chamber.

The mixing chamber comprises an outlet 19 for draining mixed starting materials from the mixing chamber. The outlet is connected to the nozzle 26 for delivering the prepared beverage into the cup 5 positioned on the plateau 14.

The mixing housing 15 comprises a first part 16 and a second part 17, which first and second part in a holding position engage each other for defining the mixing chamber for containing starting materials to be mixed.

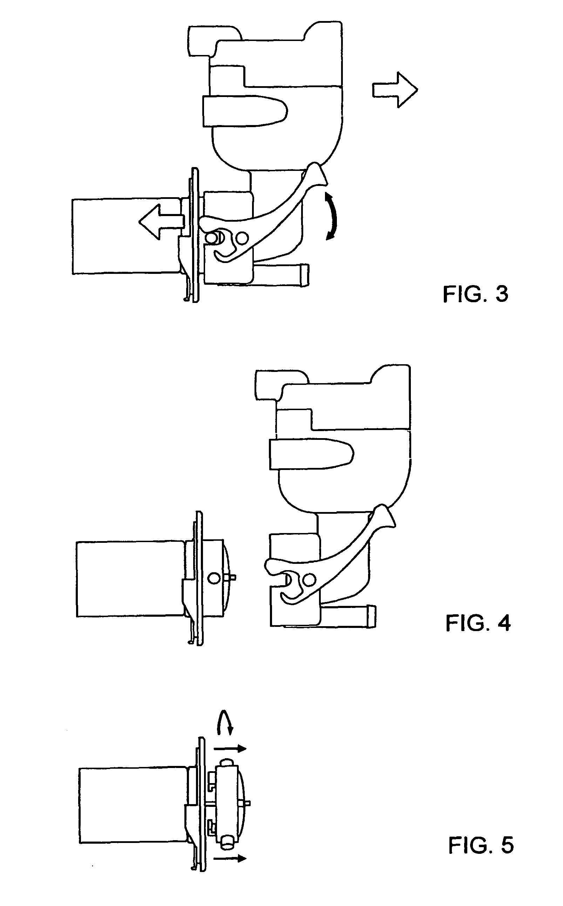

In a cleaning position the first part 16 and second part 17 are disengaged from each other for enabling cleaning of the mixing housing 15, in particular cleaning of the inside surface of the mixing chamber, and all the components contained within the mixing chamber. This cleaning position is shown in figs. 4 and 5. Thus, by providing a mixing housing 15 comprising two parts for together defining the mixing chamber, the mixing chamber can be opened up to enable easy cleaning.

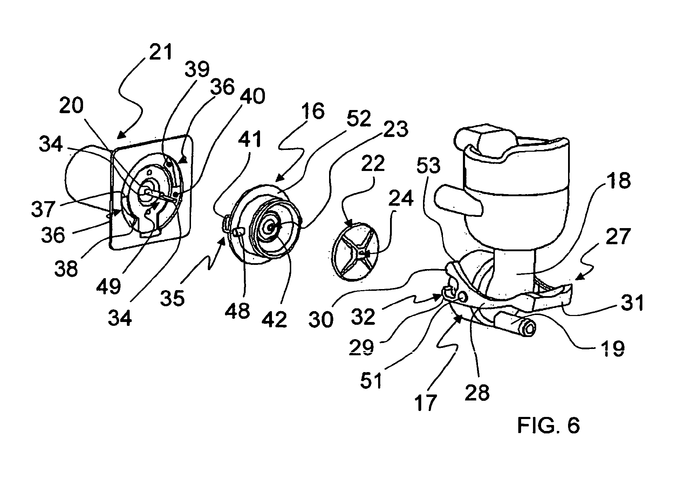

Furthermore, the first part 16 of the mixing housing 15 is moveable relatively to the frame 2 between a mounted position shown in Fig. 2 and a dismounted position, shown in fig. 4 and 6, thus enabling easy access to the other components of the apparatus.

The first part 16 of the mixing housing 15 comprises an opening 23 for holding a driving end of a driveshaft 20 for driving a mixing body 22 inside the mixing chamber

The driveshaft 20 comprises a driven end for connection to a drive 21 and a free, driving end for driving the mixing body 22. In the embodiment shown, the driven end of the driveshaft is connected with a drive 14, mounted to the frame 2 of the apparatus 1. Thus, the driveshaft 20 is rotationally supported by the frame 2 such that the driving end is positioned in the mixing chamber via the opening 23 in the first part 16 of the mixing housing 15.

In a mixing position, the mixing body 22 is provided onto the driving end of the driveshaft 20 for mixing starting materials contained in the mixing chamber in the mounted position. The mixing body 22 comprises an opening 24 for engaging the driving end of the driveshaft 20.

In the preferred embodiment shown, the driving end of the driveshaft 20 is provided with a first part 33 at some distance from the free end having a first cross section for supporting the mixing body 22 in the mixing position and a second part 34 forming the free end having a second cross section smaller than the first cross section for supporting the mixing body 22 in the cleaning position.

The opening 24 in the mixing body 22 has a radius similar to, or smaller than, the radius of a cross section of the driveshaft supporting the mixing body in the mixing position. Preferably at least the part of the mixing body defining the opening 24 for engaging the driveshaft 20 is made of a resilient material, for example rubber, to facilitate engaging of the driveshaft and the providing a tight fit preventing slippage and fixing the mixing body in the cleaning position. Due to the tight fit of the mixing body upon the driveshaft, the mixing body is not easily moved out of the mixing position by hand alone.

In the particular embodiment shown in fig. 6 the first part 33 of the driveshaft 20 has a circular cross section, and the second part 34 has a semi circular cross section. Thus the mixing body 22 can relatively easy be positioned on, or removed from, the second part 34 of the driveshaft and moved along it towards the first part of the driveshaft. By exerting some extra force upon the mixing body 22 in a direction parallel to the axis of the driveshaft 20, the mixing body is moved upon the first part of the driveshaft into the mixing position.

In an alternative embodiment, the cross section of the driveshaft and the cross section of the opening of the mixing body are both of a rectangular, complementary shape, to prevent rotation of the mixing body relative to the driveshaft. To prevent the mixing body from moving out of the mixing position during use, the second part of the mixing housing may be positioned adjacent to the free end of the driveshaft, or have an opening for engaging part of free end of the driveshaft, when in the holding position.

The apparatus 1 comprises a guiding system for guiding the first part 16 of the mixing housing 15 between the mounted position and the dismounted position in a direction parallel to the driveshaft 20, such that the first part 16 of the mixing housing 15 entails the mixing body 22 from the mixing position along the driveshaft 20 when the first part 16 of the mixing housing 15 is moved from the mounted position towards the dismounted position.

Thus, by moving the first part 16 of the mixing housing 15 from the mounted position to the dismounted position, the mixing body 22 is also moved out of its mixing position towards the free end of the driveshaft 20.

In a further embodiment, the first part of the housing is in the dismounted position at least partially moved beyond the free end of the drive shaft, forcing the mixing body past the free end and free from the driveshaft. Preferably, the first part of the mixing housing is shaped for catching the mixing body as it falls of the driveshaft, and for holding the mixing body such that it can easily be taken from the first part for cleaning.

The guiding system shown is formed for rotating the first part 16 of the mixing housing 15 about the driveshaft 20 and simultaneously translating the first part 16 of the mixing housing 15 parallel to the driveshaft 20, when the first part 16 of the mixing housing 15 is moved between the mounted position and the dismounted position. In this particular embodiment the guiding system comprises cams 35 and cam tracks 36. Alternatively, for example a system of rods may be used as a guiding system.

The guiding system comprises at least one cam, and at least one cam track for guiding the cam, the at least one cam track extending between a first end for holding the at least one cam when the first part of the mixing housing is in the mounting position and a second end for holding the at least one cam when the first part of the mixing housing is in the mounted position.

In the embodiment shown the first part 16 of the housing 15 is provided with two cams 35, positioned diametrically to opening 23. The apparatus 1 is further provided with two cam tracks 36 for engaging the cams 35, the cam tracks extending in a plane perpendicular at the driveshaft 20. The cam tracks 36 comprise main guiding surfaces 39 extending at an angle with said plane, describing a helical shape with the driveshaft as central axis. In an alternative embodiment, the at least one cam track may also extend within a tubular shaped surface extending parallel to the driveshaft. When the cams are positioned in first ends 37 of the cam tracks 36, the side of the first part 16 of the mixing housing 15 facing the cam tracks, is positioned adjacent the drive 21.

When the first part 16 of the mixing housing 15 is rotated relatively to the driveshaft in a counter clockwise direction, the cams 35 are guided by the cam tracks 36 in a helical direction relatively to the driveshaft 20, guiding the first part 16 of the housing 15 in a direction parallel to the driveshaft 20 towards the free end of the driveshaft.

Advantageously, the main guiding surface 39 describes a helical shape having a pitch such that a relatively large movement of the cams 35 about the axis of the driveshaft 20 is coupled with a relatively small movement of the cams 35 parallel to the axis of the driveshaft 20. A small force enacted upon the first part 16 of the mixing housing 15 in a rotational direction is thus advantageously converted into a relatively large force in the translational direction. Therefore, a mixing body tightly clamped onto the driveshaft can easily be moved form the mixing position into the cleaning position.

In the preferred embodiment shown, the cams 35 can be moved into and out of the cam tracks 36 by moving the first part 16 of the housing 15 in a direction parallel to the driveshaft 20. Thus the first part 16 of the mixing housing 15 can be separated from the apparatus 1 for cleaning.

In an alternative embodiment, the cam track and the cams can be shaped such that they are linked, and the cams can not be taken out of the cam tracks at all, or only at specific positions, for example at least the first end of the cam track may be open for receiving or releasing a cam, enabling the disconnecting of the first part form the guiding system when the first part of the mixing housing is positioned in the dismounted position. In such an embodiment, the cams may for example have a T-shaped or L shaped cross section when viewed in a direction of movement of the cam along the main guiding surface.

In the embodiment shown, the first end of the cam tracks 37 is provided with a flange extending parallel to and at a distance from the main guiding surface 39 of the cam tracks. The cams 35 are both L-shaped, when viewed in a direction perpendicular to the direction of movement of the came when moved along the main guiding surface. Thus each cam 35 is provided with a part extending parallel to the main guiding surface 39, enabling clamping the cam between the flange and the cam track when the first part 16 of the mixing housing 15 is positioned in the mounted position.

When the first part 16 of the mixing housing 15 is moved into the mounted position, part of the cam moves behind the flange. Due to the friction between the clam and the flange, in combination with the bending forces, extra power is needed to move the cam relatively to the came track. Thus the first part 16 of the mixing 15 housing is held in the mounted position, and can only be moved by applying extra force. The chance of the first part 16 of the mixing housing 15 accidently moving out of the mounted position is minimisezed.

In figure 6 it is shown that the first part 16 of the mixing housing 15 comprises a seat 42 for engaging the mixing body 22 when the first part 16 of the mixing housing 15 is moved from the mounted position to the dismounted position. Such a seat is advantageous in that it provides a contact surface for distributing the forces enacted by the first part upon the mixing body when entailing it.

In a preferred embodiment, the seat 42 for engaging the mixing body is positioned close to the driveshaft when the mixing body is entailed by the first part 16 of the mixing housing 15. The force is distributed to a part of the mixing body positioned near the driveshaft. This part of the mixing body is relatively stiff, and/or may endure relatively large forces without bending in comparison with peripheral parts of the mixing body which may be relatively weak and flexible.

In a further embodiment, an apparatus is provided for preparing beverages such as coffee or chocolate milk, as described above, comprising a first component, for example a first part of a mixing housing, and a second component, for example second part of the mixing housing, for engaging the first component. The apparatus is provided with a lever pivotably mounted to the second component at a pivot point for movement of the lever between a neutral position, for combining the first component and the second component, and a guiding position, for disengaging the second component and the first component to enable cleaning of the apparatus.

The lever comprises a handling arm with a grip for manipulating the lever and a guiding arm comprising a contact surface. The apparatus is further provided with a guiding surface for guidingly contacting the contact surface of the lever, which guiding surface is mounted on or integrated with the first component, such that when the lever is in the neutral position, the first component and the second component can be combined, and when the lever is in the seperating position and the contact surface contacts the guiding surface, the first component and the second component are separated.

The lever can be used for disengaging the first and second component. Because the form of the components is often defined by their function and/or the need to fit inside the apparatus, therefore the components are not alsways easy to handle. Since the lever is provided with a grip the disengagement handling is much easier then when one would handle the components directly.

In a preferred embodiment of such a lever according to the invention, the distance from the contact surface to the pivot point is larger than the distance from the grip to the pivot point. With such a lever a small force enacted upon the grip is converted in a relatively large force enacting upon the guiding surface, and thus moving the second component and the first component away form each other. Therefore, also untrained personnel can easily disengage the components.

Such a lever can be applied to all kinds of devices for preparing beverages not incorporating a guiding system as described above.

In the preferred embodiment shown the lever 27 comprises not only a guiding arm 30 but also a clamping arm 29. The lever 27 has a handling arm 44 comprising a grip 30 for manipulating the lever and the clamping arm 29 comprising a hook 32 for engaging a part of the apparatus 1 other then the second part 17 of the mixing housing 15, when in the clamping position.

The lever 27 is pivotably attached to the second part 17 of the mixing housing 15. The lever 27 can be pivoted between the clamping position, shown in fig. 2 and the neutral position, shown in fig. 3.

In the embodiment shown the hook 32 engages a protrusion 48 positioned on the first part 16 of the mixing housing 15. Thus, the lever in the clamping position holds the first part 16 of the mixing housing 15 and the second part 17 of the mixing housing 15 in the holding position.

When the lever 27 is moved from the holding position into the neutral position the hook 32 of the clamping arm 29 releases the protrusion 48 and, almost simultaneously, the guiding arm 30 contacts the guiding surface 53. The guiding surface 53 and the guiding arm 30 are formed such that by moving the guiding arm along the guiding surface, from a first end to a second end, the second part 17 of the mixing housing is pushed away from the first part 16 of the mixing housing.

The distance between the pivot point and the first end of the guiding surface is larger than the distance between the pivot point and a second end of the guiding surface. Because the radius between the guiding surface and the pivot point is constant, by moving the contact surface along the guiding surface from the first end towards the second end, the pivot point and the guiding surface are pushed away form each other.

Thus by one simple step the first and second part of the mixing housing are released, and moved into the cleaning position, saving time and simplifying the taking apart of the apparatus for cleaning.

Furthermore, in the exemplary embodiment the second part 17 of the mixing housing may be hingeably connected to the frame while the first part 16 is rotatable relative to the driveshaft 20. When the lever 27 engages the first part 16 of the mixing housing it prevents the first part from rotating relatively to the driveshaft 20 and moving out of its mounted position. Thus, the lever 27 not only positions the second part 17, but also secures the first part 16 of the mixing housing in a mounted position.

Preferably the distance from the hook 32 to the pivot point 51 is smaller than the distance from the grip 31 to said pivot point 57 such that only small force enacted upon the grip is converted in a relatively large clamping force.

Advantageously, the distance from the contact surface of the guiding arm to the pivot point is larger than the distance from the hook of the clamping arm to the pivot point. The relatively large radius of the contact surface to the pivot point makes it possible to move the second part of the housing along a relatively large distance by only slightly pivoting the lever.

In an alternative embodiment, the hook of the lever may engage the frame in stead of, or in addition to engaging the first part of the mixing housing for clamping the first and the second part of the housing against each other. Also, the guiding arm of the lever may engage a contact surface which is part of the frame.

The lever 27 preferably is y-shaped, with the handling arm 28 on one side of the pivot point 51 and the clamping arm 29 and the guiding arm 30 on the opposite side of the pivot point 51. However, other shapes are also possible.

The mixing housing is preferably provided with a seal in the form of a resilient material in-between the first and second part of the housing for preventing leakage. For such a seal to be effective, both parts should be pressed against each other with some force when in the holding position. In the embodiment shown, the distance from the hook 32 to the pivot point 51 is smaller than the distance from the grip 31 to the pivot point 51. Thus, only a relatively small force is needed to force the hook behind the cam when moving the lever into the clamping position for pressing the first and second part together.

Furthermore, especially when the first and second part of the mixing housing are provided with a seal the components may get clamped together during use and it will take some extra force to pull the two parts from each other for moving them into the cleaning position. By providing the lever with the guiding arm, the first and second part can easily be separated and by using relatively little force.

The lever comprising a guiding arm is a second aspect of the invention that also can be applied to all kinds of devices for preparing beverages not incorporating a guiding system as described above.

For cleaning the apparatus 1 shown, a user will first open the housing 3 to gain access the components of the apparatus 1. When the hingeable part 3a of the housing is moved into its open position, the person is confronted with the grip 30 of the lever 27. By using the grip 30 the lever 27 is moved from the clamping position into the neutral position. First the hook 32 release the first part 16 of the housing 15 such that the first part 16 and second part 17 can be moved into the cleaning position. In the embodiment shown, the guiding arm 30 of the lever 27 contacts the guiding surface 53 on the first part 16 of the mixing housing 15 after the hook 32 is unhooked. By moving the lever 27 towards the neutral position, the contact surface 52 of the guiding arm 30 is moved along the guiding surface 53 towards the second end, thus forcing the first part 16 and second part 17 away from each other, opening up the cleaning chamber to enable cleaning.

Both the combining chamber 10 and the second part 17 of the mixing housing 15 are movably supported by a guiding system, not shown, such that they can be moved in a direction parallel to the driveshaft away from the first part 16 of the mixing housing 15. In this displaced position both the second part 17 of the mixing housing 15 and the combining chamber can be hinged sideways (this position is not shown) to provide the user access to the other components of the apparatus 1.

With the second part 17 of the mixing chamber 15 out of the way, the user is now confronted with the first part 16 of the mixing housing 15. The first part 16 may be provided with an indication such as a printed arrow for signalling the user to rotate the part and which way to rotate the part to move it for cleaning. By rotating the first part of the housing, the first part is moved by the guiding system along the drive shaft, entailing the mixing body, from the mounted position to the dismounted position.

The cam tracks of the guiding system may be formed such that they block further rotation of the first part of the guiding system when in the dismounted position.

When the first part is in the dismounted position, the mixing body is moved from its mixing position and preferably from the driveshaft. Thus the mixing body can be easily taken from the driveshaft or out of the first part of the mixing housing for cleaning. The first part of the mixing body can be moved towards the mounted position to enable easy access to a mixing body positioned on the free end of the driveshaft.

In the preferred embodiment shown, the first part of the mixing housing can be disengaged from the apparatus to facilitate cleaning. However, the first part can also be cleaned in the dismounted position.

When the parts are cleaned, the components are mounted in reverse order. The first part of the mixing housing is moved into the mounted position. Then the mixing body is placed on the free end of the drive shaft and pushed into the mixing position. The second part of the mixing housing is positioned against the first part of the mixing housing, and both parts are clamped together by moving the lever into the clamping position. Subsequently, the housing is closed and the apparatus is ready for use.

Within the scope of the present invention, many embodiments other than those described above to illustrate the present invention are conceivable. For instance, in the exemplary embodiment coffee is obtained by mixing granulate with hot water. Alternatively, the coffee can also be fresh brew coffee which is mixed in the mixing chamber with milk powder.

The housing and the frame can also be incorporated, as can components be incorporated with (parts of) the frame and/or the housing. Also, the apparatus may comprise different components or components in a different configuration. For example, the milk powder reservoir may be connected directly to the mixing chamber. Also, the product from which a beverage is to be prepared can be products such as cocoa, milk powder, dried stock, tea, herbs, etc. may also be used as products from which beverages can be prepared.

Thus, an apparatus according to the invention can be used for preparing beverages by mixing a powder or granulate with a liquid such as water, for example beverages such as hot chocolate or energy drinks.

## Claims

1. Apparatus for preparing beverages, in particular beverages such as coffee or chocolate milk, comprising:
a frame (2) for mounting components of the apparatus (1),
a mixing housing (15), comprising a first part (16) and a second part (17), which first and second part in a holding position engage each other for defining a mixing chamber for containing starting materials to be mixed, and which first part (16) and second part (17) in a cleaning position are disengaged from each other for enabling cleaning of the mixing housing (15), **characterized in that**
said first part of the mixing housing defining an opening (23) for holding at least a driving end (34) of a driveshaft (20) for driving a mixing body (22) inside the mixing housing (15), and which first part (16) is moveable relatively to the frame (2) between a mounted position and a dismounted position,
said mixing housing comprising an inlet (18) for feeding starting materials into the mixing chamber and an outlet (19) for draining mixed starting materials from the mixing chamber, wherein the apparatus further comprises
a driveshaft (20) comprising a driven end for connection to a drive (21) and a free, driving end (49) for driving a mixing body (22), which driveshaft (20) is rotationally supported by the frame (2) such that the driving end is positioned in the mixing chamber via the opening (23) in the first part (16) of the mixing housing (15),
a mixing body (22), which in a mixing position is provided onto the driving end (49) of the driveshaft (20) for mixing starting materials contained in the mixing chamber, and which mixing body (22) comprises an opening (24) for engaging the driving end (49) of the driveshaft (20),
a guiding system for guiding the first part (16) of the mixing housing (15) between the mounted position and the dismounted position in a direction parallel to the driveshaft (20), such that the first part (16) of the mixing housing (15) entails the mixing body (22) from the mixing position along the driveshaft (20) when the first part (16) of the mixing housing (15) is moved from the mounted position towards the dismounted position, and wherein
the guiding system is formed for rotating the first part (16) of the mixing housing (15) about the driveshaft (20) and simultaneously translating the first part (16) of the mixing housing (15) parallel to the driveshaft (20), when the first part (16) of the mixing housing (15) is moved between the mounted position and the dismounted position,
the guiding system comprising at least one cam (35) and at least one cam track (36) for guiding the at least one cam, said at least one cam track (36) extending between a first end (37) for holding the at least one cam (35) when the first part of the mixing housing (16) is in the mounted position and a second end (38) for holding the at least one cam (35) when the first part (16) of the mixing housing (15) is in the dismounted position, and wherein
the at least one cam track (37) has a main guiding surface (39), which cam track extends in a direction about the driveshaft and which main guiding surface also extends in a direction at an angle with the driveshaft such that the main guiding surface forms a section of a helix witch has the driveshaft (20) as a central axis, such that
by simply rotating the first part of the mixing housing it is moved towards its dismounted position, and the mixing body can be removed efficiently with a relative small force from the mixing position into a position in which it is easy to clean.

2. Apparatus according to claim 1, wherein at least the first end of the cam track (37) is open for receiving or releasing the at least one cam (36), enabling the disconnecting of the first part (16) of the mixing housing (15) from the guiding system when the first part (16) of the mixing housing (15) is positioned in the dismounted position.

3. Apparatus according to claim 1 or 2, wherein the at least one cam track (37) has a pitch such that a relatively large movement of the at least one cam (36) about the driveshaft (20) is coupled with a relatively small movement of the at least one cam (36) parallel to the driveshaft (20).

4. Apparatus according to one of the previous claims, wherein a part of the at least one cam track (37) is provided with a flange (40) extending parallel to and at a distance from the main guiding surface (39) of the at least one cam track (37), and the at least one cam (36) is provided with a part extending parallel to the main guiding surface (39) enabling clamping of said at least one cam (36) against the flange (40) when the first part (16) of the mixing housing (15) is positioned in the mounted position.

5. Apparatus according to one of the previous claims, wherein the first part (16) of the mixing housing (15) comprises a seat (42) for engaging the mixing body (22) when the mixing body (22) is entailed by the first part of the mixing housing (16).

6. Apparatus according to claim 5, wherein the seat (42) for engaging part of the mixing body (22) close to the driveshaft (20) when the mixing body (22) is entailed by the first part (16) of the mixing housing (15).

7. Apparatus according to one of the previous claims, wherein the driving end (49) of the driveshaft (20) is provided with a first part (33) at some distance from the free end having a first cross section for supporting the mixing body (22) in the mixing position and a second part (34) at the free end having a second cross section smaller than the first cross section for supporting the mixing body (22) in the cleaning position.

8. Apparatus according to claim 7, wherein the diameter of the first cross section of the drive shaft is larger than the diameter of the opening (24) of the mixing body (22) such that the mixing body in the mixing position is clamped upon the driveshaft (20).

9. Apparatus for preparing beverages such as coffee or chocolate milk, according to one of the preceding claims, comprising
a first component (16) and a second component (17) for engaging the first component (16),
a lever (27) pivotably mounted to the second component (17) at pivot a point (51) for movement of the lever (27) between a neutral position, for combining the first and second component, and a guiding position, for disengaging the second component (17) from the first component (16) to enable cleaning of the apparatus, the lever (27) comprising a handling arm (28) comprising a grip (31) for manipulating the lever (27) and a guiding arm (30) comprising a contact surface (52), and
a guiding surface (53) for guidingly contacting the contact surface (52) of the lever (27), which guiding surface is mounted on or integrated with the first component (16), such that when the lever (27) is in the neutral position, the first component (16) and the second component (17) can be combined, and when the lever (27) is in the seperating position and the contact surface (52) contacts the guiding surface (53), the first component (16) and the second component (17) are separated.

10. Apparatus according to claim 9, wherein the distance from the contact surface (52) to the pivot point (51) is larger than the distance from the grip (31) to the pivot point (51).

11. Apparatus according to claim 9 or 10, wherein the lever (27) further comprises a clamping arm (29) comprising a hook (32) for engaging a part of the apparatus (4) by pivoting the lever (27) from the neutral position into the clamping position.

12. Apparatus according to claim 11, wherein the distance from the hook (32) to the pivot point(51) is smaller than the distance from the grip (31) to said pivot point (57).

13. Apparatus according to claim 11 or 12, wherein the lever (27) is y-shaped, with the handling arm (28) on one side of the pivot point (51) and the clamping arm (29) and the guiding arm (30) on the opposite side of the pivot point (51).

14. Apparatus according to claim 9, wherein the distance from the contact surface (52) to the pivot point (51) is larger than the distance from the hook (32) to the pivot point (51).

15. Apparatus according to one of the claims 11 -14, wherein the lever (27) in the clamping position holds both the first part of the mixing housing (16) and the second part of the mixing housing (17) in the holding position.

## Patentansprüche

1. Gerät für die Zubereitung von Getränken, insbesondere von Getränken wie zum Beispiel Kaffee oder Schokoladenmilch, aufweisend:
einen Rahmen (2) zur Montage von Bauteilen des Geräts (1),
ein Mischgehäuse (15) mit einem ersten Teil (16) und einem zweiten Teil (17), wobei das erste und das zweite Teil in einer Halteposition miteinander in Eingriff gelangen, um eine Mischkammer zur Aufnahme der zu vermischenden Ausgangsmaterialien zu bilden, und wobei das erste Teil (16) und das zweite Teil (17) in einer Reinigungsposition voneinander getrennt sind, um die Reinigung des Mischgehäuses (15) zu ermöglichen,
**dadurch gekennzeichnet,**
**dass** im ersten Teil des Mischgehäuses eine Öffnung (23) zur Aufnahme mindestens eines Antriebsendes (34) einer Antriebswelle (20) zum Antrieb eines Mischkörpers (22) im Mischgehäuse (15) ausgebildet ist, und das erste Teil (16) relativ zum Rahmen (2) zwischen einer montierten Stellung und einer demontierten Stellung beweglich ist,
das Mischgehäuse einen Einlass (18) für die Zuführung der Ausgangsmaterialien in die Mischkammer und einen Auslass (19) für den Ablauf gemischter Ausgangsmaterialien aus der Mischkammer aufweist, wobei das Gerät weiterhin aufweist:
eine Antriebswelle (20) mit einem angetriebenen Ende zur Verbindung mit einem Antrieb (21) und einem freien Antriebsende (49) zum Antrieb eines Mischkörpers (22), wobei die Antriebswelle (20) drehbar auf dem Rahmen (2) aufgelagert ist dergestalt, dass das Antriebsende in der Mischkammer über die Öffnung (23) im ersten Teil (16) des Mischgehäuses (15) angeordnet ist,
einen Mischkörper (22), der in einer Mischposition auf dem Antriebsende (49) der Antriebswelle (20) aufgesetzt ist, um die in der Mischkammer befindlichen Ausgangsmaterialien zu vermischen, und wobei der Mischkörper (22) eine Öffnung (24) zum Eingriff mit dem Antriebsende (49) der Antriebswelle (20) aufweist, und
ein Führungssystem zur Führung des ersten Teils (16) des Mischgehäuses (15) zwischen der montierten Stellung und der demontierten Stellung in einer Richtung parallel zur Antriebswelle (20) dergestalt, dass das erste Teil (16) des Mischgehäuses (15) den Mischkörper (22) aus der Mischposition entlang der Antriebswelle (20) mitnimmt, wenn das erste Teil (16) des Mischgehäuses (15) aus der montierten Stellung in Richtung der demontierten Stellung bewegt wird, und wobei
das Führungssystem so ausgebildet ist, dass das erste Teil (16) des Mischgehäuses (15) um die Antriebswelle (20) gedreht und gleichzeitig das erste Teil (16) des Mischgehäuses (15) parallel zur Antriebswelle (20) verschoben wird, wenn das erste Teil (16) des Mischgehäuses (15) eine Bewegung zwischen der montierten Stellung und der demontierten Stellung erfährt,
wobei das Führungssystem mindestens einen Nocken (35) und mindestens eine Nockenbahn (36) zum Führen des mindestens einen Nockens umfasst, wobei sich die mindestens eine Nockenbahn (36) zwischen einem ersten Ende (37) zum Halten des mindestens einen Nockens (35), wenn sich der erste Teil (16) des Mischgehäuses in der montierten Stellung befindet, und einem zweiten Ende (38) zum Halten des mindestens einen Nockens (35), wenn sich der erste Teil (16) des Mischgehäuses in der demontierten Stellung des Mischgehäuses (15) befindet, erstreckt,
und wobei die mindestens eine Nockenbahn (36) eine Hauptführungsfläche (39) aufweist, wobei die Nockenbahn in einer Richtung um die Antriebswelle verläuft und wobei sich die Hauptführungsfläche ebenfalls in einer Richtung winklig zur Antriebswelle erstreckt dergestalt, dass die Hauptführungsfläche einen Abschnitt einer Helix mit der Antriebswelle (20) als Mittelachse bildet
derart, dass durch einfaches Drehen des ersten Teils des Mischgehäuses dieses in seine demontierte Stellung bewegt wird und der Mischkörper mit einer vergleichsweise geringen Kraft wirksam aus seiner Mischposition in eine Position entfernt werden kann, in welcher er leicht zu reinigen ist.

2. Gerät nach Anspruch 1, **dadurch gekennzeichnet, dass** mindestens das erste Ende der Nockenbahn (37) zur Aufnahme oder Freigabe des mindestens einen Nockens (36) offen ist, um die Trennung des ersten Teils (16) des Mischgehäuses (15) vom Führungssystem zu ermöglichen, wenn sich das erste Teil (16) des Mischgehäuses (15) in der demontierten Stellung befindet.

3. Gerät nach Anspruch 1 oder 2, **dadurch gekennzeichnet, dass** die mindestens eine Nockenbahn (37) eine solche Steigung hat, dass eine relativ große Bewegung des mindestens einen Nockens (36) um die Antriebswelle (20) mit einer relativ kleinen Bewegung des mindestens einen Nockens (36) parallel zur Antriebswelle (20) gekoppelt ist.

4. Gerät nach einem der vorhergehenden Ansprüche, **dadurch gekennzeichnet, dass** ein Teil der mindestens einen Nockenbahn (37) einen Flansch (40) aufweist, der parallel zu der Hauptführungsfläche (39) der mindestens einen Nockenbahn (37) verläuft und von dieser abgesetzt ist, und wobei der mindestens eine Nocken (36) einen parallel zur Hauptführungsfläche (39) verlaufenden Abschnitt aufweist, um ein Klemmen des mindestens einen Nockens (36) gegen den Flansch (40) zu ermöglichen, wenn das erste Teil (16) des Mischgehäuses (15) sich in der montierten Stellung befindet.

5. Gerät nach irgendeinem der vorhergehenden Ansprüche, **dadurch gekennzeichnet, dass** das erste Teil (16) des Mischgehäuses (15) mit einem Sitz (42) zum Eingriff mit dem Mischkörper (22) versehen ist, wenn der Mischkörper (22) vom ersten Teil des Mischgehäuses (16) mitgenommen wird.

6. Gerät nach Anspruch 5, **dadurch gekennzeichnet, dass** sich die Sitzfläche (42) zum Eingriff mit einem Teil des Mischkörpers (22) in unmittelbarer Nähe der Antriebswelle (20) befindet, wenn der Mischkörper (22) vom ersten Teil (16) des Mischgehäuses (15) mitgenommen wird.

7. Gerät nach irgendeinem der vorhergehenden Ansprüche, **dadurch gekennzeichnet, dass** das Antriebsende (49) der Antriebswelle (20) einen ersten Abschnitt (33) umfasst, der vom freien Ende etwas abgesetzt ist und einen ersten Querschnitt zur Aufnahme des Mischkörpers (22) in der Mischposition aufweist, und einen zweiten Abschnitt (34) am freien Ende mit einem zweiten Querschnitt besitzt, der kleiner als der erste Querschnitt ist, um den Mischkörper (22) in der Reinigungsposition aufzunehmen.

8. Gerät nach Anspruch 7, **dadurch gekennzeichnet, dass** der Durchmesser des ersten Querschnitts der Antriebswelle größer als der Durchmesser der Öffnung (24) des Mischkörpers (22) ist dergestalt, dass der Mischkörper in der Mischposition auf der Antriebswelle (20) aufgeklemmt ist.

9. Gerät für die Zubereitung von Getränken wie zum Beispiel Kaffee oder Schokoladenmilch, nach einem der vorhergehenden Ansprüche, aufweisend:
ein erstes Bauteil (16), und ein zweites Bauteil (17) zum Eingriff mit dem ersten Bauteil (16),
einen Hebel (27), der mit dem zweiten Bauteil (17) schwenkbar an einem Schwenkpunkt (51) verbunden ist zur Bewegung des Hebels (27) zwischen einer neutralen Stellung zum Verbinden des ersten und zweiten Bauteils miteinander, und einer Führungsposition zum Trennen des zweiten Bauteils (17) vom ersten Bauteil (16), um die Reinigung des Geräts zu ermöglichen, wobei der Hebel (27) einen Bedienungsarm (28) mit einem Griff (31) zur Bedienung des Hebels (27) und einen Führungsarm (30) mit einer Kontaktfläche (52) umfasst, und
eine Führungsfläche (53) zum Führungskontakt mit der Kontaktfläche (52) des Hebels (27), wobei die Führungsfläche auf dem ersten Bauteil (16) montiert oder mit diesem integriert ist dergestalt, dass in neutraler Stellung des Hebels (27) das erste Bauteil (16) und das zweite Bauteil (17) miteinander verbunden werden können, und dass in der Trennposition des Hebels (27) und bei Kontakt der Kontaktfläche (52) mit der Führungsfläche (53) das erste Bauteil (16) und das zweite Bauteil (17) voneinander getrennt sind.

10. Gerät nach Anspruch 9, **dadurch gekennzeichnet, dass** der Abstand von der Kontaktfläche (52) zum Schwenkpunkt (51) größer ist als der Abstand vom Griff (31) zum Schwenkpunkt (51).

11. Gerät nach Anspruch 9 oder 10, **dadurch gekennzeichnet, dass** der Hebel (27) des Weiteren einen Klemmarm (29) umfasst, der mit einem Haken (32) versehen ist, damit dieser durch Schwenken des Hebels (27) aus der neutralen Position in die Klemmposition mit einem Teil des Gerätes (4) in Eingriff gebracht werden kann.

12. Gerät nach Anspruch 11, **dadurch gekennzeichnet, dass** der Abstand vom Haken (32) zum Schwenkpunkt (51) kleiner ist als der Abstand vom Griff (31) zum Schwenkpunkt (57).

13. Gerät nach Anspruch 11 oder 12, **dadurch gekennzeichnet, dass** der Hebel (27) Y-förmig ausgebildet ist und sich der Bedienungsarm (28) auf einer Seite des Schwenkpunktes (51) befindet und der Klemmarm (29) und der Führungsarm (30) auf der gegenüberliegenden Seite des Schwenkpunktes (51) angeordnet sind.

14. Gerät nach Anspruch 9, **dadurch gekennzeichnet, dass** der Abstand von der Kontaktfläche (52) zum Schwenkpunkt (51) größer als der Abstand vom Haken (32) zum Schwenkpunkt (51) ist.

15. Gerät nach einem der Ansprüche 11 bis 14, **dadurch gekennzeichnet, dass** der Hebel (27) in der Klemmposition sowohl das erste Teil des Mischgehäuses (16) als auch das zweite Teil des Mischgehäuses (17) in der Halteposition hält.

## Revendications

1. Appareil pour préparer des boissons, en particulier des boissons telles que le café ou le chocolat au lait, comprenant :
un châssis (2) pour monter les composants de l'appareil (1),
un boîtier de mélange (15), comprenant une première partie (16) et une deuxième partie (17), lesquelles première et deuxième parties, dans une position de support, se mettent en prise l'une avec l'autre afin de définir une chambre de mélange pour contenir des matériaux de départ devant être mélangés, et lesquelles première partie (16) et deuxième partie (17), dans une position de nettoyage, sont dégagées l'une de l'autre pour permettre le nettoyage du boîtier de mélange (15), **caractérisé en ce que** :
ladite première partie du boîtier de mélange définit une ouverture (23) pour supporter au moins une extrémité d'entraînement (34) d'un arbre d'entraînement (20) pour entraîner un corps de mélange (22) à l'intérieur du boîtier de mélange (15), et laquelle première partie (16) est mobile par rapport au châssis (2) entre une position montée et une position démontée,
ledit boîtier de mélange comprend une entrée (18) pour alimenter la chambre de mélange en matériaux de départ et une sortie (19) pour drainer les matériaux de départ mélangés provenant de la chambre de mélange, dans lequel l'appareil comprend en outre :
un arbre d'entraînement (20) comprenant une extrémité entraînée pour le raccordement à un dispositif d'entraînement (21) et une extrémité d'entraînement libre (49) pour entraîner un corps de mélange (22), lequel arbre d'entraînement (20) est supporté de manière rotative par un châssis (2) de sorte que l'extrémité d'entraînement est positionnée dans la chambre de mélange via l'ouverture (23) dans la première partie (16) du boîtier de mélange (15),
un corps de mélange (22) qui, dans une position de mélange, est prévu sur l'extrémité d'entraînement (49) de l'arbre d'entraînement (20) pour mélanger les matériaux de départ contenus dans la chambre de mélange, et lequel corps de mélange (22) comprend une ouverture (24) pour mettre en prise l'extrémité d' entraînement (49) de l'arbre d' entraînement (20),
un système de guidage pour guider la première partie (16) du boîtier de mélange (15) entre la position montée et la position démontée dans une direction parallèle à l'arbre d'entraînement (20), de sorte que la première partie (16) du boîtier de mélange (15) entraîne le corps de mélange (22) à partir de la position de mélange le long de l'arbre d'entraînement (20) lorsque la première partie (16) du boîtier de mélange (15) est déplacée de la position montée vers la position démontée, et dans lequel :
le système de guidage est formé pour faire tourner la première partie (16) du boîtier de mélange (15) autour de l'arbre d'entraînement (20) et faire effectuer simultanément un mouvement de translation à la première partie (16) du boîtier de mélange (15) parallèle à l'arbre d'entraînement (20), lorsque la première partie (16) du boîtier de mélange (15) est déplacée entre la position montée et la position démontée,
le système de guidage comprenant au moins une came (35) et au moins un chemin de came (36) pour guider l'au moins une came, ledit au moins un chemin de came (36) s'étendant entre une première extrémité (37) pour maintenir l'au moins une came (35) lorsque la première partie du boîtier de mélange (16) est dans la position montée et une deuxième extrémité (38) pour maintenir l'au moins une came (35) lorsque la première partie (16) du boîtier de mélange (15) est dans la position démontée, et dans lequel :
le au moins un chemin de came (36) a une surface de guidage principale (39), lequel chemin de came s'étend dans une direction autour de l'arbre d'entraînement et laquelle surface de guidage principale s'étend également dans une direction selon un angle avec l'arbre d'entraînement de sorte que la surface de guidage principale forme une section d'une hélice qui a l'arbre d'entraînement (20) en tant qu'axe central, de sorte que :
en faisant simplement tourner la première partie du boîtier de mélange, elle est déplacée vers sa position démontée, et le corps de mélange peut être retiré efficacement avec une force relativement faible depuis la position de mélange jusqu'à une position dans laquelle il est facile à nettoyer.

2. Appareil selon la revendication 1, dans lequel au moins la première extrémité du chemin de came (37) est ouverte pour recevoir ou libérer l'au moins une came (36), permettant la déconnexion de la première partie (16) du boîtier de mélange (15) du système de guidage lorsque la première partie (16) du boîtier de mélange (15) est positionnée dans la position démontée.

3. Appareil selon la revendication 1 ou 2, dans lequel le au moins un chemin de came (37) a un pas de sorte qu'un mouvement relativement important de l'au moins une came (36) autour de l'arbre d'entraînement (20) est couplé avec un mouvement relativement petit de l'au moins une came (36) parallèle à l'arbre d'entraînement (20).

4. Appareil selon l'une quelconque des revendications précédentes, dans lequel une partie de l'au moins un chemin de came (37) est prévue avec un rebord (40) s'étendant parallèlement à et à une certaine distance de la surface de guidage principale (39) de l'au moins un chemin de came (37), et l'au moins une came (36) est prévue avec une partie s'étendant parallèlement à la surface de guidage principale (39) permettant le serrage de ladite au moins une came (36) contre le rebord (40) lorsque la première partie (16) du boîtier de mélange (15) est positionnée dans la position montée.

5. Appareil selon l'une quelconque des revendications précédentes, dans lequel la première partie (16) du boîtier de mélange (15) comprend un siège (42) pour mettre en prise le corps de mélange (22) lorsque le corps de mélange (22) est entraîné par la première partie du boîtier de mélange (16).

6. Appareil selon la revendication 5, dans lequel le siège (42) pour mettre en prise la partie du corps de mélange (22) à proximité de l'arbre d'entraînement (20) lorsque le corps de mélange (22) est entraîné par la première partie (16) du boîtier de mélange (15).

7. Appareil selon l'une quelconque des revendications précédentes, dans lequel l'extrémité d'entraînement (49) de l'arbre d'entraînement (20) est prévue avec une première partie (33) à une certaine distance de l'extrémité libre ayant une première section transversale pour supporter le corps de mélange (22) dans la position de mélange et une deuxième partie (34) au niveau de l'extrémité libre, ayant une deuxième section transversale inférieure à la première section transversale pour supporter le corps de mélange (22) dans la position de nettoyage.

8. Appareil selon la revendication 7, dans lequel le diamètre de la première section transversale de l'arbre d'entraînement est supérieur au diamètre de l'ouverture (24) du corps de mélange (22) de sorte que le corps de mélange dans la position de mélange est serré sur l'arbre d'entraînement (20).

9. Appareil pour préparer des boissons telles que du café ou du chocolat au lait, selon l'une quelconque des revendications précédentes, comprenant :
un premier composant (16) et un deuxième composant (17) pour mettre en prise le premier composant (16),
un levier (27) monté de manière pivotante sur le deuxième composant (17) au niveau d'un point de pivot (51) pour le mouvement du levier (27) entre une position neutre, pour combiner les premier et deuxième composants, et une position de guidage, pour dégager le deuxième composant (17) du premier composant (16) afin de permettre le nettoyage de l'appareil, le levier (27) comprenant un bras de manipulation (28) comprenant une poignée (31) pour manipuler le levier (27) et un bras de guidage (30) comprenant une surface de contact (52), et
une surface de guidage (53) pour entrer en contact par guidage avec la surface de contact (52) du levier (27), ladite surface de guidage est montée sur ou intégrée avec le premier composant (16), de sorte que lorsque le levier (27) est dans la position neutre, le premier composant (16) et le deuxième composant (17) peuvent être combinés, et lorsque le levier (27) est dans la position de séparation et que la surface de contact (52) est en contact avec la surface de guidage (53), le premier composant (16) et le deuxième composant (17) sont séparés.

10. Appareil selon la revendication 9, dans lequel la distance de la surface de contact (52) jusqu'au point de pivot (51) est supérieure à la distance de la poignée (31) jusqu'au point de pivot (51).

11. Appareil selon la revendication 9 ou 10, dans lequel le levier (27) comprend en outre un bras de serrage (29) comprenant un crochet (32) pour mettre en prise une partie de l'appareil (4) en faisant pivoter le levier (27) depuis la position neutre jusqu'à la position de serrage.

12. Appareil selon la revendication 11, dans lequel la distance du crochet (32) jusqu'au point de pivot (51) est inférieure à la distance de la poignée (31) jusqu'audit point de pivot (57).

13. Appareil selon la revendication 11 ou 12, dans lequel le levier (27) est en forme de Y, avec le bras de manipulation (28) sur un côté du point de pivot (51) et le bras de serrage (29) et le bras de guidage (30) sur le côté opposé du point de pivot (51).

14. Appareil selon la revendication 9, dans lequel la distance de la surface de contact (52) jusqu'au point de pivot (51) est supérieure à la distance du crochet (32) jusqu'au point de pivot (51).

15. Appareil selon l'une quelconque des revendications 11 à 14, dans lequel le levier (27) dans la position de serrage maintient à la fois la première partie du boîtier de mélange (16) et la deuxième partie du boîtier de mélange (17) dans la position de support.
